# EUROPEAN PATENT APPLICATION

(11) **EP 1 443 242 A2**
(43) Date of publication of application: **04.08.2004**
(21) Application number: 03077406.1
(22) Date of filing: 01.08.2003
(51) Int. Cl.: F16G 5/18

(54) **An improved mechanical component for CVT chains**

(30) Priority: 31.01.2003 JP 2003024520; 31.01.2003 JP 2003024525
(71) Applicant: NTRK Co., Ltd., Tokyo 142-0063 (JP)
(72) Inventor: Nishimoto, Takashi, Tokyo 142-0063 (JP); Van Rooij, Jacobus Hubertus Maria, 5672 BA Nuenen (NL)
(74) Representative: Eriksson, Hans Gustaf

(57) **Abstract**

In construction of a mechanical component such as a pin (3) or a strip (5), at least one curved section extending in the moving direction is formed on the contact end of the component, or at least one inclined section converging in the chain entry side is formed on the contact end of the component; and/or a curved or inclined section is formed on the contact end of the component extending at least partially in the vertical direction; and/or at least one groove extending in one of the vertical and moving directions is formed in the contact end of the component.

## Description

### Background of the invention

The present invention relates to an improved mechanical component for CVT chains, and more particularly relates to reduction in noise emission by a mechanical component such as a pin or a strip used for CVT chains.

In this specification, the term " contact end " refers to an end of the mechanical component adapted for contact with pulley surfaces on a CVT. A term " axial direction " refers to a direction from one end to the other end of the mechanical component. A term " moving direction " refers to a direction parallel to the direction of travel of chains on a CVT and perpendicular to the axial direction. A term " vertical direction " refers to a direction perpendicular to the axial and moving directions.

On a CVT, each chain travels over a pair of spaced cone pulleys along an endless path and is made up of a plurality of links. Each pin extends through links in adjacent chains.

When the CVT is in operation, the chain circulates along the endless path due to frictional contact of the contact ends of each pin with the conical surfaces of the pulley. For smooth frictional contact with the pulley cone surfaces, each contact end of the pin usually has an inclination of 11 degrees in the vertical direction.

When a link approaches a pulley during circulation of a chain, an associated pin is going to enter the pulley and, at this moment, impulsive contact of the contact ends of the pin with the pulley conical surface causes intensive emission of harsh noises.

The mode of noises depends on the magnitude of striking energy per unit time and the magnitude of the striking energy is proportional to the kinetic energy of the pin, i.e. the square value of the travelling velocity of the pin. As a consequence, the quicker the operation of the CVT, the higher the emission of noises. No effective expedients have been conventionally proposed to reduce such emission of harsh noises.

### Summary of the invention

It is thus the primary object of the present invention to effectively suppress emission of harsh noises during operation of CVTs.

In accordance with the first aspect of the present invention applied for a pin for CVT chains, at least one curved section extending in the moving direction is formed on the contact end of the pin, or at least one inclined section converging towards the chain entry side is formed on the contact end of the pin; and/or a curved or inclined section is formed on the contact end of the pin extending at least partially in the vertical direction; and/or at least one groove extending in one of the vertical and moving directions is formed in the contact end of the pin.

Thanks to presence of the curved or inclined section or grooves, one or more oil pools are formed between the contact end of the pin and the pulley surface and such pools function as a sort of mechanical cushion which effectively alleviates the impulsive contact at entry of the pin into the pulley. Presence of the curved or inclined section allows smooth entry of the pin into the pulley, which also reduces impulsive contact. Crests or projections present between adjacent grooves vibrate at impulsive contact to absorb striking energy. These operations resulted all concur to alleviate noise emission at impulsive contact between the pins and pulleys.

In accordance with the second aspect of the present invention applied for a pin for CVT chains, a curved or inclined section extending in the moving direction is formed on the contact end of a strip; and/or a curved section extending in the moving direction is formed on at least one of the upper and lower ends of the contact ends of a strip; and/or at least one groove extending at least one of the vertical and moving directions is formed in the contact end of a strip; and/or at least one groove extending in the axial direction is formed in at least one of the upper and lower ends of the contact end of a strip.

Thanks to presence of the curved or inclined section or grooves, one or more oil pools are formed between the contact end of the pin and the pulley surface and such pools function as a sort of mechanical cushion which effectively alleviates the impulsive contact at entry of the strip into the pulley. Presence of the curved or inclined section allows smooth entry of the strip into the pulley, which also reduces impulsive contact. Crests or projections present between adjacent grooves vibrate at impulsive contact to absorb striking energy. These operations resulted all concur to alleviate noise emission at impulsive contact between the strips and pulleys.

### Brief description of the drawings

Fig. 1 is a side view of a chain in contact with a cone pulley,
Fig. 2 is a perspective view of the contact end of a pin,
Fig. 3 is a plan view of the first embodiment of the present invention applied to a pin in accordance with the first aspect,
Fig. 4 is a plan view of the second embodiment of the present invention applied to a pin in accordance with the first aspect,
Fig. 5 is a plan view of the third embodiment of the present invention applied to a pin in accordance with the first aspect,
Fig. 6 is a side view of the fourth embodiment of the present invention applied to a pin in accordance with the first aspect,
Fig. 7 is a side view of the fifth embodiment of the present invention applied to a pin in accordance with the first aspect,
Fig. 8 is a contact end view of the sixth embodiment of the present invention applied to a pin in accordance with the first aspect,
Fig. 9 is a contact end view of the seventh embodiment of the present invention applied to a pin in accordance with the first aspect,
Fig. 10 is a contact end view of the eighth embodiment of the present invention applied to a pin in accordance with the first aspect,
Fig. 11 is a contact end view of the ninth embodiment of the present invention applied to a pin in accordance with the first aspect,
Fig. 12 is a side view of a strip associated with a pin,
Fig. 13 is a perspective view of a strip,
Fig. 14 is a side view of the first embodiment of the present invention in accordance with the second aspect,
Fig. 15 is a side view of the second embodiment of the present invention in accordance with the second aspect,
Fig. 16 is a side view of the third embodiment of the present invention in accordance with the second aspect,
Fig. 17 is an end view of the fourth embodiment of the present invention in accordance with the second aspect,
Fig. 18 is an end view of the fifth embodiment of the present invention in accordance with the second aspect,
Fig. 19 is a contact end view of the sixth embodiment of the present invention applied to a strip in accordance with the second aspect.

### Description of embodiments

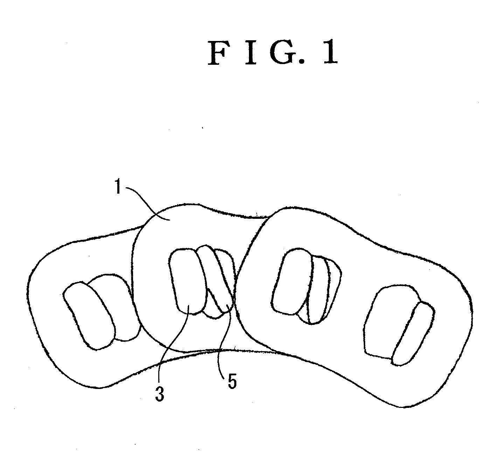

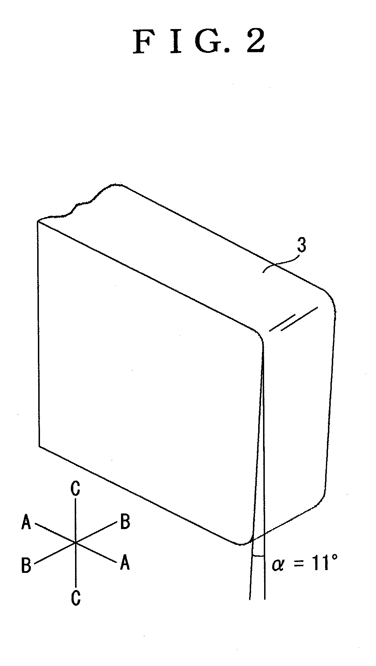

Fig. 1 shows a chain in contact with a cone pulley ( not shown ) in which adjacent links 1 are connected to each other via pins 3 and strips 5. In Fig. 2, the axial direction is indicated with a line A - A, the moving direction is indicated with a line B - B and the vertical direction is indicated with a line C - C.

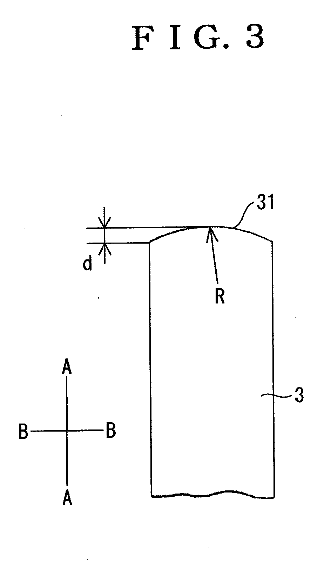

One embodiment of the pin in accordance with the first aspect of the present invention is shown in Fig. 3 in which the contact end of the pin 3 is provided with a curved section 31 extending in the moving direction B - B. The curved section 31 may extend either entirely or locally in the moving direction. The radius of curvature of the curved section 31 should preferably be selected so that the width " d " of the curved section is in a range from 0.05 to 0.20 mm.

Thanks to presence of such a curved section 31, an oil pool is formed between the pulley and the contact end of the pin 3 which functions as a sort of mechanical cushion. In addition, presence of the curved or inclined section allows smooth entry of the pin into the pulleys. These concur to suppress emission of noises quite effectively.

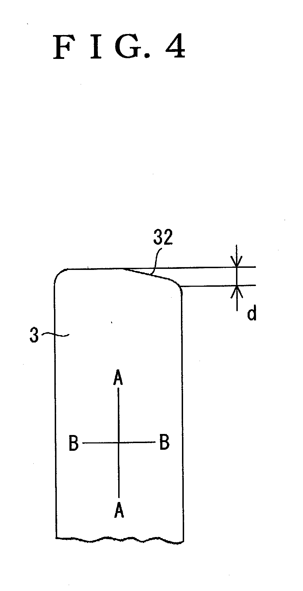

Fig. 4 shows another embodiment of the pin in accordance with the first aspect of the present invention, in which an inclined section 32 is formed on the contact end of a pin 3 whilst converging toward the entry side. Here, the word " entry side " refers to the right side in the illustration along the moving direction B - B. The width " d " of the inclined section 32 should preferably be about 0.2 mm.

Thanks to presence of the inclined section 32, an oil pool is formed between the pulley and the contact end of the pin which functions as a sort of mechanical cushion. In addition, presence of the inclined section allows smooth entry of the pin into the pulleys. These concur to effectively suppress emission of harsh noises.

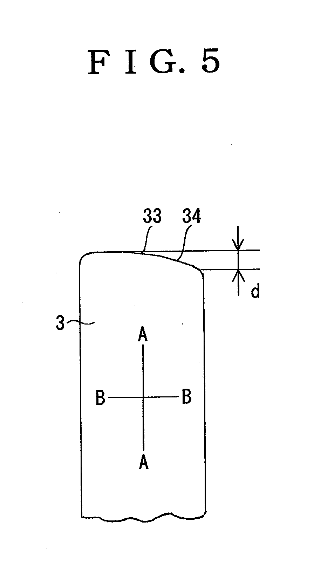

Fig. 5 shows the other embodiment of the pin in accordance with the first aspect of the present invention, in which two successive inclined sections 33 and 34 are formed on the contact end of the pin 3 whilst converging towards the entry side. The total width of the inclined sections 33 and 34 should preferably be in a range from 0.1 to 0.3 mm.

Thanks to presence of the inclined sections 33 and 34, an oil pool is formed between the pulley and the contact end of the pin which functions as a sort of mechanical cushion. In addition, presence of the inclined section allows smooth entry of the pin into the pulleys. These concur to effectively suppress emission of harsh noises.

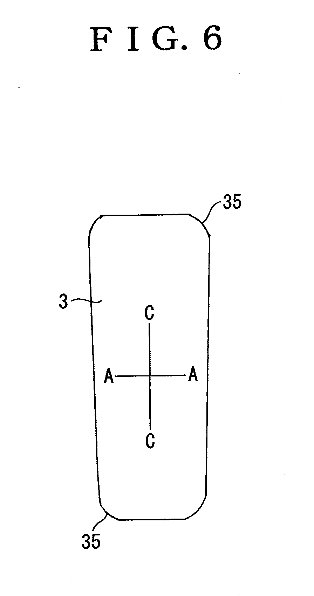

Fig. 6 shows the other embodiment of the pin in accordance with the first aspect of the present invention, in which one or more curved sections 35 are formed on the contact end of a pin 3 whilst extending at least locally in the vertical direction C - C.

Thanks to presence of the curved sections 35, an oil pool is formed between the pulley and the contact end of the pin which functions as a sort of mechanical cushion. As a result, emission of harsh noises is effectively suppressed.

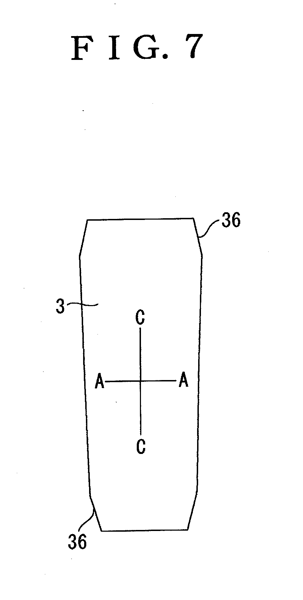

Fig. 7 shows the other embodiment of the pin in accordance with the first aspect of the present invention, in which one or more inclined sections 36 are formed on the contact end of a pin 3 whilst extending at least locally in the vertical direction C - C.

Thanks to presence of the inclined sections 36, an oil pool is formed between the pulley and the contact end of the pin which functions as a sort of mechanical cushion. As a result, emission of harsh noises is effectively suppressed.

The embodiments shown in Figs. 6 and 7 may be properly combined for increased suppression of harsh noises.

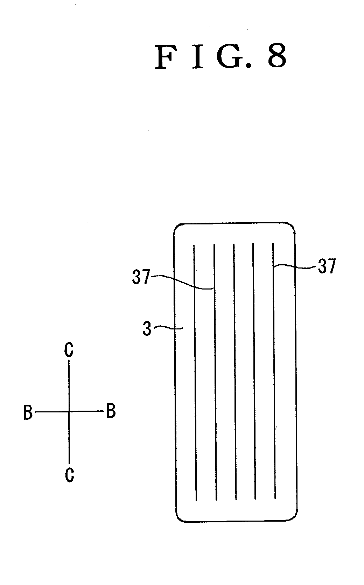

Fig. 8 shows the other embodiment of the pin in accordance with the first aspect of the present invention, in which a plurality of straight grooves 37 are formed on the contact end of a pin 3 whilst extending in the vertical direction C - C in parallel to each other.

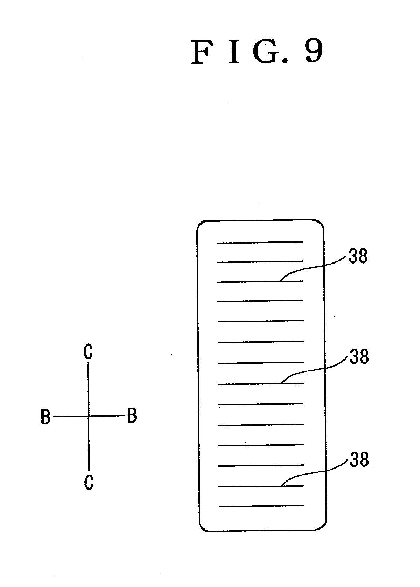

Fig. 9 shows the other embodiment of the pin in accordance with the first aspect of the present invention, in which a plurality of straight grooves 38 are formed on the contact end of a pin 3 whilst extending in the moving direction B - B in parallel to each other.

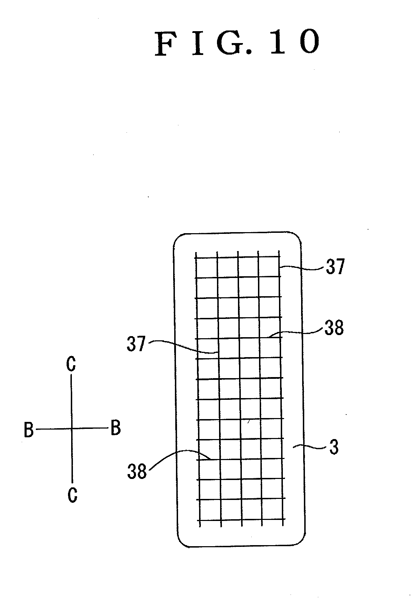

Fig. 10 shows the other embodiment of the pin in accordance with the first aspect of the present invention, in which a plurality of straight grooves 37 and 38 are formed on the contact end of a pin 3 whilst extending in the vertical and moving directions in parallel to each other in the respective directions.

Thanks to presence of the grooves 37 and/or 38, an oil pool is formed between the pulley and the contact end of the pin which functions as a sort of mechanical cushion. Crests between adjacent grooves vibrate at impulsive contact of the pin with the pulleys. Since the striking energy is converted into vibration energy, emission of harsh noises is effectively suppressed.

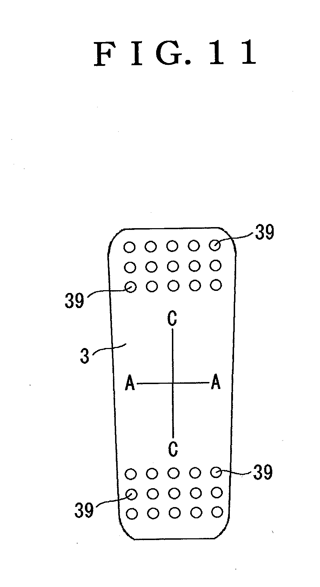

In the case of the embodiment shown in Fig. 11, a plurality of recesses 39 are formed either totally or locally in the contact end of a pin 3. This embodiment may be combined with the embodiments shown in Figs. 8 thorough 10 for increased suppression of noises.

Further the above-described various embodiments may be properly combined on the contact ends of a pin. For example, one embodiment may be employed on one contact end and another embodiment may be employed on another contact end of a same pin. Such pins each with different embodiments may be randomly combined to form a single chain.

Thanks to the mechanical cushion afforded by the oil pool and/or smooth entry into the pulleys and/or partial vibration of the pins, emission of harsh noises is effectively suppressed.

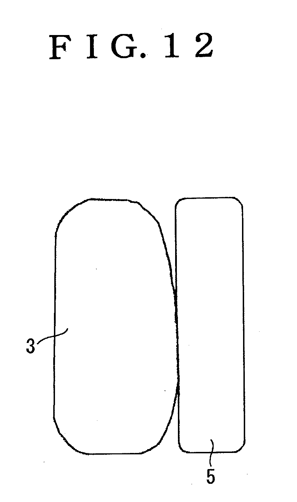

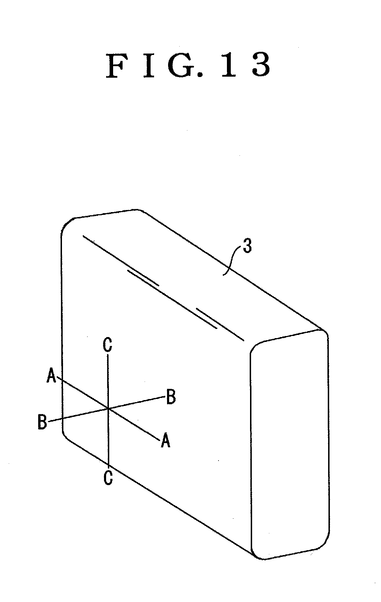

Fig. 12 shows a combination of a strip 5 with a pin 3 in a CVT chain. In Fig. 13, the axial direction of a strip is indicated by a line A - A, the moving direction is indicated by a line B - B and the vertical direction is indicated by a line C - C.

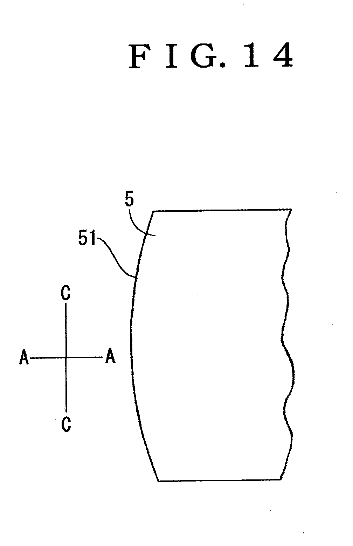

Fig. 14 shows one embodiment of the strip in accordance with the second aspect of the present invention, in which a curved section 51 formed on the contact end of the strip 5 whilst extending in the vertical direction C - C. The curved section 51 may extend either fully or locally in the vertical direction on the contact end.

Thanks to presence of the curved section, an oil pool is formed between the pulley and the contact end of the strip which functions as a sort of mechanical cushion. Further presence of the curved section allows smooth entry of the strip into the pulleys. These concur to suppress emission of harsh noises effectively.

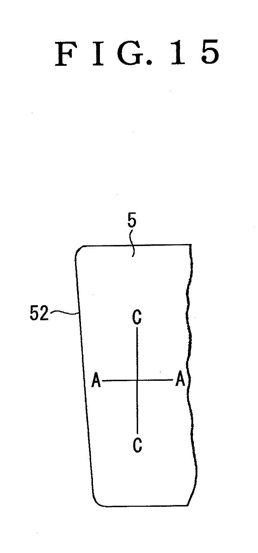

Fig. 15 shows another embodiment of the strip in accordance with the second aspect of the present invention, in which an inclined section 52 is formed on the contact end of the strip 5 whilst extending in the vertical direction C - C. The inclined section may extend either fully or locally in the vertical direction on the contact end of the strip.

Thanks to presence of the inclined section, an oil pool is formed between the pulley and the contact end of the strip which functions as a sort of mechanical cushion. Further, presence of the inclined section allows smooth entry of the strip into the pulleys. These concur to effectively suppress emission of harsh noises.

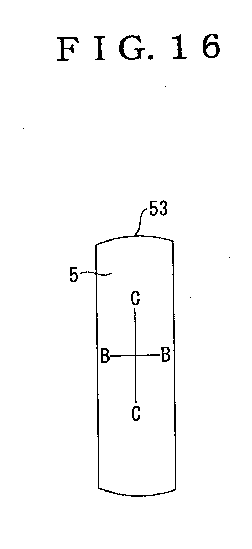

Fig. 16 shows the other embodiment of the strip in accordance with the second aspect of the resent invention, in which curved sections 53 are formed on the upper and lower ends of the strip at the contact end whilst extending in the moving direction B - B. The curved section may extend either fully or locally in the moving direction. The curved section may be formed either on both vertical ends or on one vertical end of the strip.

Thanks to presence of each curved section, an oil pool is formed between the pulley and the contact end of the strip which functions as a sort of mechanical cushion. Further, presence of each curved section allows smooth entry of the strip into the pulleys. These concur to effectively suppress emission of harsh noises.

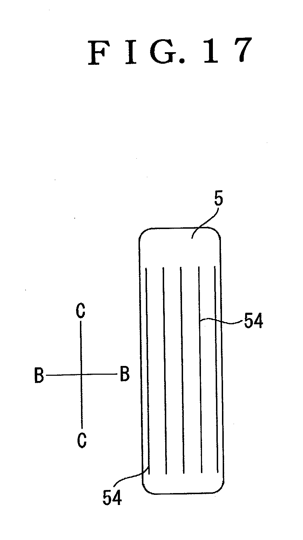

Fig. 17 shows the other embodiment of the strip in accordance with the second aspect of the present invention, in which a plurality of grooves 54 are formed in the contact end of the strip 5 whilst extending in the vertical direction C - C in parallel to each other.

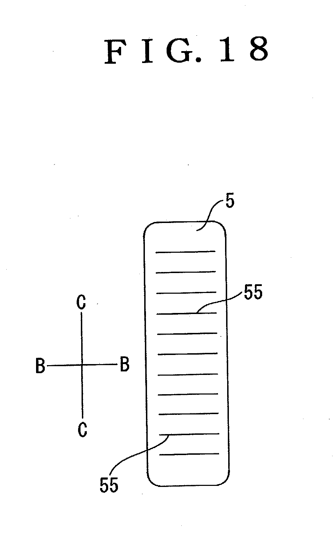

Fig. 18 shows the other embodiment of the strip in accordance with the second aspect of the present invention, in which a plurality of grooves 55 are formed in the contact end of the strip 5 whilst extending in the moving direction B - B in parallel to each other. Though not illustrated, the vertical and horizontal grooves 54 and 55 may be formed in a perpendicular arrangement to each other.

In either embodiments shown in Figs. 17 and 18, presence of the grooves forms oil pools between the pulleys and the contact ends of the strip which function as a sort of mechanical cushion. Crests or projections between adjacent grooves vibrate at impulsive contact of the strip with the pulley. This vibration converts striking energy into vibration energy whilst mitigating conversion into sonic energy, thereby effectively suppressing emission of harsh noises at impulsive contact.

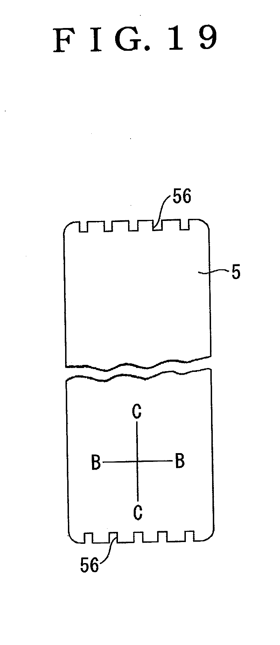

Fig. 19 shows the other embodiment of the strip in accordance with the second aspect of the present invention, in which parallel grooves 56 are formed in the upper and lower ends of the contact end of the strip 5 whilst extending in the axial direction A - A. The grooves may be formed either in the both vertical ends or in one vertical end of the contact end of the strip 5. This embodiment may be properly combined with the embodiments shown in Figs. 17 and 18.

In this case, crests of projections between adjacent grooves vibrate at impulsive contact. This vibration converts striking energy into vibration energy whilst mitigating conversion into sonic energy, thereby effectively suppressing emission of harsh noises at impulsive contact.

Further the above-described various embodiments may be properly combined on the contact ends of a strip. For example, one embodiment may be employed on one contact end and another embodiment may be employed on another contact end of a same strip. Such strips each with different embodiments may be randomly combined to form a single chain.

Thanks to the mechanical cushion afforded by the oil pool and/or smooth entry into the pulleys and/or partial vibration of the strips, emission of harsh noises is effectively suppressed.

## Claims

1. An improved pin for CVT chains comprising
contact ends at least one of which includes at least one curved section extending in a moving direction.

2. An improved pin for CVT chains comprising
contact ends at least one of which includes at least one inclined section converging in a chain entry side.

3. An improved pin according to claim 1 in which
said curved section extends over an entire area in said moving direction.

4. An improved pin according to claim 2 in which one inclined section is formed on said contact end.

5. An improved pin according to claim 2 in which two inclined sections are formed on said contact end.

6. An improved pin for CVT chains comprising
contact ends at least one of which includes a curved section extending at least locally in a vertical direction.

7. An improved pin for CVT chains comprising
contact ends at least one of which includes an inclined section extending at least locally in a vertical direction.

8. An improved pin for CVT chains comprising
contact ends at least one of which includes at least one groove extending in at least one of vertical and moving directions.

9. An improved pin according to claim 8 in which
at least one groove is formed in said contact end whilst extending in said vertical direction.

10. An improved pin according to claim 8 in which
at least one groove is formed in said contact end whilst extending in said moving direction.

11. An improved pin according to claim 8 in which
at least two grooves are formed in said contact end whilst extending in said vertical and moving directions, respectively.

12. An improved pin for CVT chains comprising
contact ends at least one of which includes at least one of a curved section extending in a moving direction and an inclined section converging in a chain entry side, at least one curved section extending at least locally in a vertical direction and at least one groove extending in at least one of said vertical and moving directions.

13. An improved strip for CVT chains comprising
contact ends at least one of which includes a curved section extending at least locally in a vertical direction.

14. An improved strip for CVT chains comprising
contact ends at least one of which includes an inclined section extending at least locally in a vertical direction.

15. An improved strip for CVT chains comprising
contact ends at least one of which includes a curved section formed on at least one of upper and lower ends whilst extending at least locally in a moving direction.

16. An improved strip for CVT chains comprising
contact ends at least one of which includes at least one groove extending in at least one of vertical and moving directions.

17. An improved strip for CVT chains comprising
contact ends at least one of which includes at least one groove formed on at least one of upper end lower ends whilst extending in an axial direction.
